# EUROPEAN PATENT APPLICATION

(11) **EP 4 842 085 A1**
(43) Date of publication of application: **18.11.2026**
(21) Application number: 25751072.7
(22) Date of filing: 10.01.2025
(51) Int. Cl.: H04W 52/14

(54) **COMMUNICATION METHOD, APPARATUS, AND SYSTEM, CHIP, CHIP MODULE, AND STORAGE MEDIUM**

(30) Priority: 07.02.2024 CN 202410175980
(71) Applicant: Huawei Technologies Co., Ltd., Shenzhen, Guangdong 518129 (CN)
(72) Inventor: FAN, Bo, Shenzhen, Guangdong 518129 (CN); LI, Fang, Shenzhen, Guangdong 518129 (CN)
(74) Representative: Epping - Hermann - Fischer
(86) International application number: PCT/CN2025/071893
(87) International publication number: WO 2025/167470

(57) **Abstract**

A communication method, apparatus, and system, a chip, a chip module, and a storage medium are provided. The method includes: A terminal device sends a first uplink signal to a first network device and a second network device; the first network device sends first indication information to the terminal device, where the first indication information indicates at least one of the following: a path loss difference between a first path loss and a second path loss or a received power difference between a first received power and a second received power; and the terminal device determines the second path loss based on the first indication information. According to the solution of this application, when the second network device has no downlink transmission capability, the first network device indicates the path loss difference or the received power difference to the terminal device, so that the terminal device can determine the second path loss between the terminal device and the second network device based on the indication, thereby improving accuracy of determining the path loss between the terminal device and the second network device.

## Description

This application claims priority to Chinese Patent Application No. 202410175980.2, filed with the China National Intellectual Property Administration on February 7, 2024 and entitled "COMMUNICATION METHOD, APPARATUS, AND SYSTEM, CHIP, CHIP MODULE, AND STORAGE MEDIUM", which is incorporated herein by reference in its entirety.

### TECHNICAL FIELD

This application relates to the field of communication technologies, and in particular, to a communication method, apparatus, and system, a chip, a chip module, and a storage medium.

### BACKGROUND

In mobile communication systems, because a transmit power of a terminal device is generally lower than a transmit power of a network device. Therefore, signal strength of uplink transmission is generally lower than signal strength of downlink transmission. Consequently, some terminal devices have good downlink transmission performance but poor uplink transmission performance. To resolve this problem, one approach is to deploy some low-cost network devices that have only an uplink function. If such a network device is present around the terminal device, uplink transmission may be performed via the network device, thereby improving uplink transmission performance.

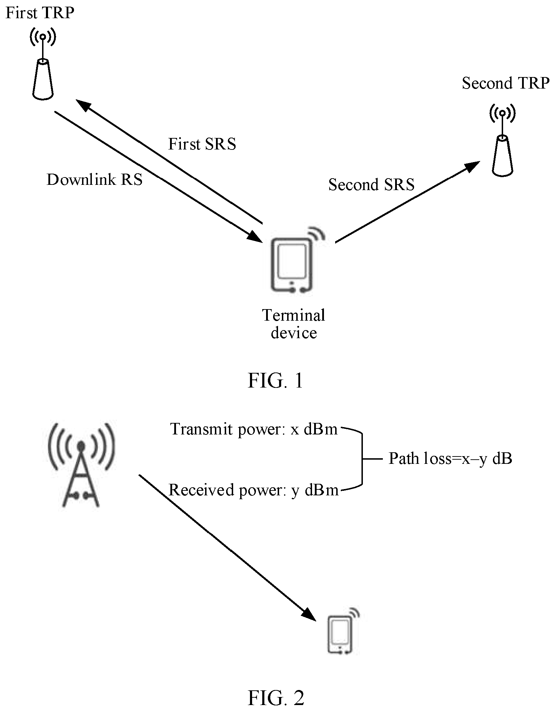

As shown in FIG. 1, a communication scenario is illustrated. A first transmission reception point (transmission reception point, TRP) is a TRP that supports both an uplink function and a downlink function, and a second TRP is a TRP that only supports an uplink function. A terminal device is closer to the second TRP. When the terminal device communicates with the first TRP, although a distance therebetween is long, downlink signal quality is still good because a downlink transmit power of the first TRP is high. However, uplink signal quality is poor because an uplink transmit power of the terminal device is low and the terminal device is far from the first TRP. In this case, the terminal device may further establish a connection to the second TRP, and perform joint uplink transmission with the first TRP and the second TRP. In other words, the terminal device may transmit uplink signals to both the first TRP and the second TRP, to improve uplink transmission performance of the terminal device.

However, how does the terminal device determine an uplink transmit power for communication with the second TRP? The uplink transmit power is calculated based on a signal transmission path loss (that is, a degree of energy attenuation during signal propagation, which is referred to as a path loss (path loss, PL) for short) between the terminal device and the second TRP. The path loss is obtained by the terminal device by receiving and measuring a path loss measurement reference signal sent by the second TRP. However, the second TRP has no downlink function, and cannot send the path loss measurement reference signal.

Therefore, when the network device does not support a downlink function, how the terminal device obtains a path loss between the terminal device and the network device is an urgent problem to be resolved.

### SUMMARY

This application provides a communication method, apparatus, and system, a chip, a chip module, and a storage medium, to accurately obtain a path loss between a terminal device and a second network device.

According to a first aspect, a communication method is provided, where the method includes: sending a first uplink signal to a first network device and a second network device; receiving first indication information from the first network device, where the first indication information indicates at least one of the following: a path loss difference between a first path loss and a second path loss or a received power difference between a first received power and a second received power, the first path loss is a path loss between a terminal device and the first network device, the second path loss is a path loss between the terminal device and the second network device, the first received power is a received power of the first uplink signal received by the first network device, and the second received power is a received power of the first uplink signal received by the second network device; and determining the second path loss based on the first indication information.

For example, "the first received power is a received power of the first uplink signal received by the first network device" may be understood as "the first received power is a received power used by the first network device to receive the first uplink signal"; and "the second received power is a received power of the first uplink signal received by the second network device" may be understood as "the second received power is a received power used by the second network device to receive the first uplink signal".

Alternatively, the method includes: sending a first uplink signal to a first network device; and sending a fourth uplink signal to a second network device; receiving first indication information from the first network device, where the first indication information indicates at least one of the following: a path loss difference between a first path loss and a second path loss or a received power difference between a first received power and a second received power, the first path loss is a path loss between a terminal device and the first network device, the second path loss is a path loss between the terminal device and the second network device, the first received power is a received power of the first uplink signal received by the first network device, and the second received power is a received power of the first uplink signal received by the second network device; and determining the second path loss based on the first indication information.

That the first indication information indicates the at least one of the following: the path loss difference between the first path loss and the second path loss or the received power difference between the first received power and the second received power may be understood as that the first indication information includes the at least one of the following: the path loss difference between the first path loss and the second path loss or the received power difference between the first received power and the second received power.

In this aspect, when the second network device has no downlink transmission capability, the terminal device receives the path loss difference or the received power difference indicated by the first network device, so that the terminal device can determine the second path loss between the terminal device and the second network device based on the indication, thereby improving accuracy of determining the path loss between the terminal device and the second network device.

With reference to the first aspect, in a possible implementation, before the determining the second path loss based on the first indication information, the method further includes: receiving a first path loss resource from the first network device; and determining the first path loss between the terminal device and the first network device by using the first path loss resource.

In this implementation, the transmission configuration indicator-state (transmission configuration indicator/indication state, TCI state) is an information element, including information such as a beam used for uplink and downlink transmission, a path loss resource, and a power control parameter. The first path loss is a path loss corresponding to a path loss resource in a first TCI state, and may be obtained by measuring the path loss resource.

With reference to the first aspect, in another possible implementation, the determining the second path loss based on the first indication information includes: determining the second path loss based on the first path loss and the path loss difference; or determining the second path loss based on the first path loss, the received power difference, a first transmit power, and a second transmit power, where the first transmit power is a transmit power corresponding to the first uplink signal sent by the terminal device to the first network device, and the second transmit power is a transmit power corresponding to the first uplink signal sent by the terminal device to the second network device.

For example, "the first transmit power is a transmit power corresponding to the first uplink signal sent by the terminal device to the first network device" may be understood as "the first transmit power is a transmit power used by the terminal device to send the first uplink signal to the first network device"; and "the second transmit power is a transmit power corresponding to the first uplink signal sent by the terminal device to the second network device" may be understood as "the second transmit power is a transmit power used by the terminal device to send the first uplink signal to the second network device".

With reference to the first aspect, in still another possible implementation, the first transmit power is equal to the second power.

With reference to the first aspect, in still another possible implementation, the second transmit power is determined based on the first path loss.

With reference to the first aspect, in still another possible implementation, the method further includes: sending first information to the first network device, where the first information indicates the transmit powers of the first uplink signal, and the transmit powers are used by the first network device to calculate the path loss difference.

"The transmit powers of the first uplink signal" refers to the first transmit power and the second transmit power.

With reference to the first aspect, in still another possible implementation, the first path loss resource is a path loss resource in a first transmission configuration indicator-state, and the first TCI state is a 1^{st} one of two TCI states currently used by the terminal device for uplink transmission.

With reference to the first aspect, in still another possible implementation, the method further includes: receiving second indication information from the first network device, where the second indication information indicates an updated first TCI state; sending a third uplink signal to the first network device and the second network device, where sending the third uplink signal to the first network device is based on the updated first TCI state; and receiving third indication information, where the third indication information indicates at least one of the following: an updated path loss difference or an updated received power difference.

For example, "sending the third uplink signal to the first network device is based on the updated first TCI state" may be understood as " the third uplink signal is sent to the first network device based on the updated first TCI state".

In this implementation, after receiving the second indication information, the terminal device receives, on an updated first path loss resource included in the updated first TCI state indicated by the second indication information, a path loss measurement reference signal from the first network device, measures the path loss measurement reference signal to obtain a received power of the path loss measurement reference signal, and calculates a new first path loss based on an obtained transmit power of the path loss measurement reference signal and the received power that is obtained through measurement. The terminal device sends the third uplink signal to the first network device based on the new first path loss obtained through calculation, and sends the third uplink signal to the second network device based on the old second path loss. The terminal device receives the third indication information from the first network device, where the third indication information is obtained by the first network device through calculation based on the received third uplink signal.

With reference to the first aspect, in still another possible implementation, the method further includes: determining an updated second path loss based on the updated path loss difference or the updated received power difference, and an updated first path loss.

With reference to the first aspect, in still another possible implementation, the method further includes: before determining the updated first TCI state and receiving the updated path loss difference or the updated received power difference, determining the second path loss based on the previous path loss difference or the previous received power difference, and the previous first path loss.

In this implementation, as the terminal device moves, both a value of the first path loss and a value of the path loss difference that are used to calculate the second path loss may change. Before determining the updated first TCI state and receiving the updated path loss difference or the updated received power difference, the terminal device determines the second path loss based on the old path loss difference or the old received power difference, and the old first path loss. After determining the updated first TCI state and receiving the updated path loss difference or the updated received power difference, the terminal device determines the second path loss based on a new path loss difference or a new received power difference, and a new first path loss. Therefore, accuracy of the second path loss is improved.

For example, the method may be applied to a terminal device side, for example, a terminal device or a communication module in the terminal device, or a circuit or a chip (for example, a modem (modem) chip, also referred to as a baseband (baseband) chip, or a system on chip (system on chip, SoC) chip including a modem core, or a system in package (system in package) SIP chip) that is responsible for a communication function in the terminal device. An example in which the foregoing method is applied to the terminal device side is used.

According to a second aspect, a communication method is provided, where the method includes: receiving a first uplink signal from a terminal device; and sending first indication information to the terminal device, where the first indication information indicates at least one of the following: a path loss difference between a first path loss and a second path loss or a received power difference between a first received power and a second received power, the first path loss is a path loss between the terminal device and a first network device, the second path loss is a path loss between the terminal device and a second network device, the first received power is a received power of the first uplink signal received by the first network device, and the second received power is a received power of the first uplink signal received by the second network device.

That the first indication information indicates the at least one of the following: the path loss difference between the first path loss and the second path loss or the received power difference between the first received power and the second received power may be understood as that the first indication information includes the at least one of the following: the path loss difference between the first path loss and the second path loss or the received power difference between the first received power and the second received power.

In this aspect, when the second network device has no downlink transmission capability, the first network device indicates the path loss difference or the received power difference to the terminal device, so that the terminal device can determine the second path loss between the terminal device and the second network device based on the indication, thereby improving accuracy of determining the path loss between the terminal device and the second network device.

With reference to the second aspect, in a possible implementation, the method further includes: sending a first path loss resource to the terminal device; and determining the first path loss between the terminal device and the first network device by using the first path loss resource.

In this implementation, a TCI state is an information element, including information such as a beam used for uplink and downlink transmission, a path loss resource, and a power control parameter. The first path loss is a path loss corresponding to a path loss resource in a first TCI state, and may be obtained by measuring the path loss resource.

With reference to the second aspect, in another possible implementation, the method further includes: receiving first information from the terminal device, where the first information indicates transmit powers of the first uplink signal; and calculating the path loss difference based on the transmit powers.

With reference to the second aspect, in still another possible implementation, the first path loss resource is a path loss resource in the first transmission configuration indicator TCI state, and the first TCI state is a 1^{st} one of two TCI states currently used by the terminal device for uplink transmission.

With reference to the second aspect, in still another possible implementation, the method further includes: sending second indication information to the terminal device, where the second indication information indicates an updated first TCI state; receiving a third uplink signal from the terminal device, where the third uplink signal is based on the updated first TCI state; and sending third indication information to the terminal device, where the third indication information indicates at least one of the following: an updated path loss difference or an updated received power difference.

For example, the method may be applied to a network device side, or applied to a circuit, a chip, or a chip system of a network device.

A third aspect provides a communication apparatus configured to implement the communication method in the first aspect or any one of the implementations of the first aspect. The apparatus may be a terminal device, or a module (for example, a processor, a chip, or a chip system) used in the terminal device, or a logical node, a logical module, or software that can implement all or some of functions of the terminal device.

A fourth aspect provides a communication apparatus configured to implement the communication method in the second aspect or any one of the implementations of the second aspect. The apparatus may be a network device, or a module (for example, a processor, a chip, or a chip system) used in the network device, or a logical node, a logical module, or software that can implement all or some functions of the network device.

In a possible implementation, the communication apparatus in the third aspect or the fourth aspect includes a unit, a module, or a means (means) configured to separately perform the method in any one of the first aspect and the second aspect or the implementations of the first aspect and the second aspect. The unit, the module, or the means may be specifically implemented by using software, hardware, or a combination of software and hardware.

For example, the communication apparatus includes a transceiver unit and a processing unit.

When the communication apparatus is configured to implement the method according to any one of the first aspect or the implementations of the first aspect, the transceiver unit is configured to send a first uplink signal to a first network device and a second network device; the transceiver unit is further configured to receive first indication information from the first network device, where the first indication information indicates at least one of the following: a path loss difference between a first path loss and a second path loss or a received power difference between a first received power and a second received power, the first path loss is a path loss between the apparatus and the first network device, the second path loss is a path loss between the apparatus and the second network device, the first received power is a received power of the first uplink signal received by the first network device, and the second received power is a received power of the first uplink signal received by the second network device; and the processing unit is configured to determine the second path loss based on the first indication information.

Alternatively, the transceiver unit is configured to send a first uplink signal to a first network device; the transceiver unit is further configured to send a fourth uplink signal to a second network device; the transceiver unit is further configured to receive first indication information from the first network device, where the first indication information indicates at least one of the following: a path loss difference between a first path loss and a second path loss or a received power difference between a first received power and a second received power, the first path loss is a path loss between the apparatus and the first network device, the second path loss is a path loss between the apparatus and the second network device, the first received power is a received power of the first uplink signal received by the first network device, and the second received power is a received power of the first uplink signal received by the second network device; and the processing unit is configured to determine the second path loss based on the first indication information.

Optionally, the transceiver unit is further configured to receive a first path loss resource from the first network device; and the processing unit is further configured to determine the first path loss between the apparatus and the first network device by using the first path loss resource.

Optionally, the processing unit is further configured to determine the second path loss based on the first path loss and the path loss difference, or the processing unit is further configured to determine the second path loss based on the first path loss, the received power difference, a first transmit power, and a second transmit power, where the first transmit power is a transmit power corresponding to the first uplink signal sent by the terminal device to the first network device, and the second transmit power is a transmit power corresponding to the first uplink signal sent by the terminal device to the second network device.

Optionally, the first transmit power is equal to the second transmit power.

Optionally, the second transmit power is determined based on the first path loss.

Optionally, the transceiver unit is further configured to send first information to the first network device, where the first information indicates the transmit powers of the first uplink signal, and the transmit powers are used by the first network device to calculate the path loss difference.

Optionally, the first path loss resource is a path loss resource in a first transmission configuration indicator TCI state, and the first TCI state is a 1^{st} one of two TCI states currently used by the apparatus for uplink transmission.

Optionally, the transceiver unit is further configured to receive second indication information from the first network device, where the second indication information indicates an updated first TCI state; the transceiver unit is further configured to send a third uplink signal to the first network device and the second network device, where sending the third uplink signal to the first network device is based on the updated first TCI state; and the transceiver unit is further configured to receive third indication information, where the third indication information indicates at least one of the following: an updated path loss difference or an updated received power difference.

Optionally, the processing unit is further configured to determine an updated second path loss based on the updated path loss difference or the updated received power difference, and an updated first path loss.

Optionally, the processing unit is further configured to: before determining the updated first TCI state and receiving the updated path loss difference or the updated received power difference, determine the second path loss based on the previous path loss difference or the previous received power difference, and the previous first path loss.

When the communication apparatus is configured to implement the method according to any one of the second aspect or the implementations of the second aspect, the transceiver unit is configured to receive a first uplink signal from a terminal device; the processing unit is configured to generate first indication information, where the first indication information indicates at least one of the following: a path loss difference between a first path loss and a second path loss or a received power difference between a first received power and a second received power, the first path loss is a path loss between the terminal device and the apparatus, the second path loss is a path loss between the terminal device and a second network device, the first received power is a received power of the first uplink signal received by the apparatus, and the second received power is a received power of the first uplink signal received by the second network device; and the transceiver unit is further configured to send the first indication information to the terminal device.

Optionally, the transceiver unit is further configured to send a first path loss resource to the terminal device; and the processing unit is further configured to determine the first path loss between the terminal device and the apparatus by using the first path loss resource.

Optionally, the transceiver unit is further configured to receive first information from the terminal device, where the first information indicates transmit powers of the first uplink signal; and the processing unit is further configured to calculate the path loss difference based on the transmit powers.

Optionally, the first path loss resource is a path loss resource in a first transmission configuration indicator TCI state, and the first TCI state is a 1^{st} one of two TCI states currently used by the terminal device for uplink transmission.

Optionally, the processing unit is further configured to generate second indication information, where the second indication information indicates an updated first TCI state; the transceiver unit is further configured to send the second indication information to the terminal device; the transceiver unit is further configured to receive a third uplink signal from the terminal device, where the third uplink signal is based on the updated first TCI state; the processing unit is further configured to generate third indication information, where the third indication information indicates at least one of the following: an updated path loss difference or an updated received power difference; and the transceiver unit is further configured to send the third indication information to the terminal device.

In another possible implementation, the communication apparatus in the third aspect or the fourth aspect includes a processor coupled to a memory. The processor is configured to cause the apparatus to perform corresponding functions in the foregoing communication method. The memory is configured to be coupled to the processor, and stores a program (instructions) and/or data necessary for the apparatus. Optionally, the communication apparatus may further include a communication interface configured to implement communication between the apparatus and another network element. Optionally, the memory may be located inside the communication apparatus, or may be located outside the communication apparatus.

In still another possible implementation, the communication apparatus in the third aspect or the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to: receive a signal from a communication apparatus other than the communication apparatus and transmit the signal to the processor, or send a signal from the processor to a communication apparatus other than the communication apparatus. When the communication apparatus is the chip, the transceiver apparatus is a transceiver circuit or an input/output interface.

When the communication apparatus in the third aspect or the fourth aspect is a chip, a sending unit may be an output unit, for example, an output circuit or a communication interface, and a receiving unit may be an input unit, for example, an input circuit or a communication interface. When the communication apparatus is a terminal device, a sending unit may be a transmitter or a transmitting machine, and a receiving unit may be a receiver or a receiving machine.

A fifth aspect provides a computer-readable storage medium. The computer-readable storage medium stores a computer program or instructions. When the computer program or the instructions are executed, the method according to the foregoing aspects is implemented.

A sixth aspect provides a computer program product including instructions. When the instructions are run on a communication apparatus, the communication apparatus is caused to perform the method according to the foregoing aspects.

A seventh aspect provides a communication system. The communication system includes the communication apparatus according to the third aspect and the communication apparatus according to the fourth aspect.

### BRIEF DESCRIPTION OF DRAWINGS

FIG. 1 is a diagram of a communication scenario;
FIG. 2 is a diagram of path loss measurement;
FIG. 3 is a diagram of a communication system according to an embodiment of this application;
FIG. 4 is a diagram of an open radio access network system according to an embodiment of this application;
FIG. 5 is a diagram of network element function division and a protocol layer structure of an open radio access network device according to an embodiment of this application;
FIG. 6 is a schematic flowchart of a communication method according to an embodiment of this application;
FIG. 7 is a schematic flowchart of another communication method according to an embodiment of this application;
FIG. 8 is a diagram of an example of a time sequence requirement for updating a second path loss according to an embodiment of this application;
FIG. 9 is a diagram of a structure of another communication apparatus according to an embodiment of this application; and
FIG. 10 is a diagram of a structure of still another communication apparatus according to an embodiment of this application.

### DESCRIPTION OF EMBODIMENTS

The following further describes the solutions of this application with reference to the accompanying drawings.

The following are terms that may be used in embodiments of this application:

### 1. Beam

The beam is a special directional sending or receiving effect formed by a transmitting machine or a receiving machine of a network device or a terminal device by using an antenna array, and is similar to a flashlight converging light to a direction to form a beam of light. Signal sending and receiving in a form of the beam can effectively increase a signal transmission distance.

In addition, the beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, the terminal device feeds back measured resource quality, and the network device knows quality of a corresponding beam. During data transmission, beam information is also indicated by using a resource corresponding to the beam information. For example, the network device indicates a transmission configuration indicator-state (TCI state) by using a TCI field in downlink control information (downlink control information, DCI), and the terminal device determines to use a reference resource included in the TCI state to determine a beam for data.

In a communication protocol, a beam may be specifically represented as a digital beam, an analog beam, a spatial domain filter (spatial domain filter), a spatial filter (spatial filter), a spatial parameter (spatial parameter), a TCI, a TCI state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like.

In this application, a beam is uniformly used for description. However, it should be understood that the beam in this application may be replaced with another equivalent concept, and is not limited to the foregoing mentioned concept.

### 2. Resource

In a communication protocol, a reference signal is configured in a form of the resource. A network device configures each reference signal for a terminal device in the form of the resource. One resource is one configuration information unit, and usually includes a parameter related to a reference signal, for example, a time-frequency resource position, a quantity of ports, and a time domain type (periodic/semi-static/aperiodic) of the reference signal.

The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information-reference signal (channel state information-reference signal, CSI-RS), a cell-specific reference signal (cell-specific reference signal, CS-RS), a user equipment-specific reference signal (user equipment-specific reference signal, US-RS), a DMRS, and a synchronization signal/physical broadcast channel block (synchronization signal and PBCH block, SS/PBCH block). The SS/PBCH block may be referred to as a synchronization signal block (synchronization signal block, SSB) for short.

### 3. TCI state

In uplink transmission, a network device indicates, by indicating the TCI state, information such as a beam and a path loss measurement resource that are used for uplink transmission. Specifically, the TCI state includes a reference signal resource used for beam reference, and uplink transmission for which the TCI state is used should be performed by using a beam corresponding to the reference signal resource. The TCI state further includes a reference signal resource used to determine a path loss, and uplink transmission for which the TCI state is used should be performed by using the path loss corresponding to the reference signal resource.

TCI states are classified into an uplink TCI state (dedicated for uplink transmission), a downlink TCI state (dedicated for downlink transmission), and an uplink-downlink joint TCI state (which may be used for uplink transmission and downlink transmission). Unless otherwise specified in this application, the TCI state is the uplink TCI state and/or the uplink-downlink joint TCI state. The TCI state includes a joint TCI state mode and a separate TCI state mode. In the joint TCI state mode, a unified TCI state, which is the foregoing uplink-downlink joint TCI state, is applied to uplink and downlink. In the separate TCI state mode, separate TCI states are applied to uplink and downlink, where the uplink TCI state is used for uplink transmission, and the downlink TCI state is used for downlink transmission.

In a mobile communication system, that a terminal device sends a signal to a network device is referred to as uplink transmission. That the network device sends a downlink signal to the terminal device is referred to as downlink transmission. A transmit power of the terminal device is usually less than a transmit power of the network device. Therefore, signal strength of the uplink transmission is usually less than signal strength of the downlink transmission. Consequently, some terminal devices have good downlink transmission performance but poor uplink transmission performance. To resolve this problem, a method is to deploy some low-cost network devices that have only an uplink function. If such a network device exists around the terminal device, uplink transmission may be performed via the network device, thereby improving uplink transmission performance.

FIG. 1 is a diagram of a communication scenario. A first TRP is a TRP having an uplink function and a downlink function, and a second TRP is a TRP having only an uplink function. The second TRP is closer to a terminal device. When the terminal device performs communication via the first TRP, downlink signal quality is good, but uplink signal quality is poor. In this case, the terminal device may further establish a connection to the second TRP, and perform joint uplink transmission with the first TRP and the second TRP. In other words, the terminal device may transmit an uplink signal to the first TRP and the second TRP, to improve uplink transmission performance of the terminal device.

That the terminal device transmits the uplink signal to the first TRP and the second TRP may be referred to as uplink multi-TRP transmission. The uplink multi-TRP transmission includes one or more of the following transmission modes. Unless otherwise specified, the method in this application is applicable to a scenario corresponding to any one of the following modes.

Mode 1: A terminal device separately transmits same data to two TRPs at different time, and a network side combines same data signals received by the two TRPs, to improve signal strength of the data.

Mode 2: A terminal device transmits same data to two TRPs at the same time, and a network side combines same data signals received by the two TRPs, to improve signal strength of the data.

Mode 3: A terminal device transmits different data or different data streams of same data to two TRPs at the same time, to increase an amount of uplink transmission data and improve uplink transmission performance.

However, in the scenario shown in FIG. 1, a key issue is how the terminal device determines a transmit power of the uplink signal sent to the second TRP. Usually, the terminal device calculates the transmit power of the uplink signal based on a loss of a signal transmission path between the terminal device and a network device (to be specific, an energy fading degree in a signal propagation process, which is referred to as a path loss for short). Therefore, to determine the transmit power of the uplink signal sent to the second TRP, the terminal device needs to first determine a path loss between the terminal device and the second TRP.

The path loss between the terminal device and the network device may be obtained by the terminal device by measuring a downlink signal sent by the network device to the terminal device. FIG. 2 is a diagram of path loss measurement. A network device sends a path loss measurement reference signal to a terminal device by using a specific transmit power x (the network device notifies the terminal device of the transmit power (unit: dBm) in advance), and the terminal device obtains, through measurement, a received power y (unit: dBm) of the path loss measurement reference signal. The terminal device subtracts the received power y of the path loss measurement reference signal from the transmit power x of the path loss measurement reference signal, to obtain a path loss x-y (unit: dB) between the terminal device and the network device. It should be noted that for a same terminal device and a same network device, a path loss of uplink transmission is equal to a path loss of downlink transmission. Therefore, the terminal device may obtain a path loss experienced during uplink transmission by measuring a downlink signal.

In the foregoing manner, the terminal device obtains the path loss between the terminal device and the network device by measuring the downlink signal (that is, the path loss measurement reference signal). However, in the scenario shown in FIG. 1, the second TRP has no downlink function, and cannot send a downlink signal, and therefore cannot measure a path loss.

When the network device has no downlink function, how does the terminal device obtain a path between the terminal device and the network device?

This application provides a communication solution. When a second network device has no downlink transmission capability, a first network device indicates a path loss difference or a received power difference to a terminal device, so that the terminal device can determine a second path loss between the terminal device and the second network device based on the indication, thereby improving accuracy of determining the path loss between the terminal device and the second network device.

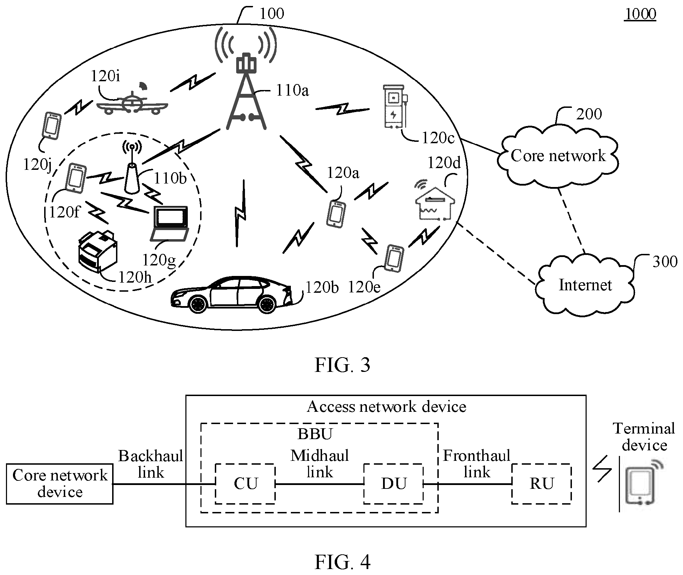

FIG. 3 is a diagram of a possible non-limiting communication system. As shown in FIG. 3, the communication system 1000 includes a radio access network (radio access network, RAN) 100 and a core network (core network, CN) 200. The communication system 1000 may further include an internet 300. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open radio access network (open RAN, O-RAN, or ORAN), a cloud radio access network (cloud radio access network, CRAN), or a wireless fidelity (wireless fidelity, Wi-Fi) system. Alternatively, the RAN 100 may be a communication system obtained by combining two or more of the foregoing systems.

The RAN node 110 may also be sometimes referred to as an access network device, a RAN entity, an access node, or the like, and forms a part of the communication system, to help the terminal device implement radio access. A plurality of RAN nodes 110 in the communication system 1000 may be nodes of a same type, or may be nodes of different types. In some scenarios, roles of the RAN node 110 and the terminal device 120 are relative. For example, a network element 120i in FIG. 3 may be a helicopter or an uncrewed aerial vehicle, and may be configured as a mobile base station. For a terminal device 120j that accesses the RAN 100 through the network element 120i, the network element 120i is a base station. However, for the base station 110a, the network element 120i is a terminal device. The RAN node 110 and the terminal device 120 are sometimes referred to as communication apparatuses. For example, the network elements 110a and 110b in FIG. 3 may be understood as communication apparatuses having a base station function, and the network elements 120a to 120j may be understood as communication apparatuses having a terminal device function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 3), a micro base station or an indoor station (for example, 110b in FIG. 3), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the terminal device in implementing radio access, and different RAN nodes separately implement a part of functions of a base station. For example, the RAN node may be a central unit (central unit, CU), a distributed unit (distributed unit, DU), a central unit-control plane (central unit-control plane, CU-CP), a central unit-user plane (central unit-user plane, CU-UP), a radio unit (radio unit, RU), or the like. The CU and the DU may be separately arranged, or may be included in a same network element, for example, in a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings of the names. For example, in an ORAN system, the CU may also be referred to as an open-central unit (open-CU, O-CU), the DU may also be referred to as an open-distributed unit (open-distributed unit, O-DU), the CU-CP may also be referred to as an open-central unit-control plane (open-central unit-control plane, O-CU-CP), the CU-UP may also be referred to as an open-central unit-user plane (open-central unit-user plane, O-CU-UP), and the RU may also be referred to as an open-radio unit (open-radio unit, O-RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, remote medical, a smart grid, smart furniture, a smart office, a smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A device form of the terminal device is not limited in embodiments of this application.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media/medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

The base station and the terminal device may be fixed or movable. The base station and the terminal device may be deployed on land, including an indoor or outdoor deployment, and a handheld or a vehicle-mounted deployment; or may be deployed on water; or may be deployed on an airplane, a balloon, and an artificial satellite. Application scenarios of the base station and the terminal device are not limited in embodiments of this application.

Roles of the base station and the terminal device may be relative. For example, a helicopter or an uncrewed aerial vehicle 120i in FIG. 3 may be configured as a mobile base station, and for those terminal devices 120j accessing the radio access network 100 through 120i, the terminal device 120i is a base station. However, for the base station 110a, 120i is a terminal device. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, the base station and the terminal device may be collectively referred to as communication apparatuses, 110a and 110b in FIG. 3 may be referred to as communication apparatuses having a base station function, and 120a to 120j in FIG. 3 may be referred to as communication apparatuses having a terminal device function.

In embodiments of this application, the base station is also referred to as an access network device. An apparatus configured to implement a function of the access network device may be an access network device, or may be an apparatus that can support the access network device in implementing the function, for example, a chip system, a hardware circuit, a software module, or a combination of a hardware circuit and a software module. The apparatus may be mounted in the access network device or used in conjunction with the access network device. In embodiments of this application, an example in which the apparatus configured to implement the function of the access network device is an access network device is merely used for description, and constitutes no limitation on the solutions in embodiments of this application.

It may be understood that, this application may be applied between the access network device and the terminal device.

It should be understood that, a quantity and types of devices in the communication system shown in FIG. 3 are merely used as an example. This application is not limited thereto. In actual application, the communication system may further include more terminal devices and more access network devices, and may further include another network element, for example, may include a core network device and/or a network element configured to implement an artificial intelligence function.

It may be understood that all or some of functions implemented by one or more of the terminal device, the access network device, the core network device, or the network element configured to implement the artificial intelligence function may be virtualized, that is, implemented by one or more of a dedicated processor or a general-purpose processor and a corresponding software module. Because the terminal device and the access network device are related to an air interface transmission interface, receiving and sending functions of the interface may be implemented by hardware. The core network device like an operation, administration, and maintenance (operation, administration, and maintenance, OAM) network element may be virtualized. Optionally, one or more functions of a virtualized terminal device, access network device, core network device, or network element configured to implement the artificial intelligence function may be implemented by a cloud device, for example, implemented by a cloud device in an over-the-top (over-the-top, OTT) system.

FIG. 4 is a diagram of an O-RAN system according to an embodiment of this application. The O-RAN system may include a component other than the components shown in FIG. 4.

As shown in FIG. 4, an access network device communicates with a core network through a backhaul (backhaul) link, and communicates with a terminal device through an air interface.

Specifically, a BBU in the access network device communicates with the core network through the backhaul link, and an RU in the access network device communicates with the at least one terminal device through the air interface. The BBU communicates with the at least one RU through a fronthaul link, and the BBU and the RU may be co-located, or may not be co-located.

The BBU includes at least one CU and at least one DU, and the at least one CU and the at least one DU may communicate with each other through at least one midhaul (midhaul) link.

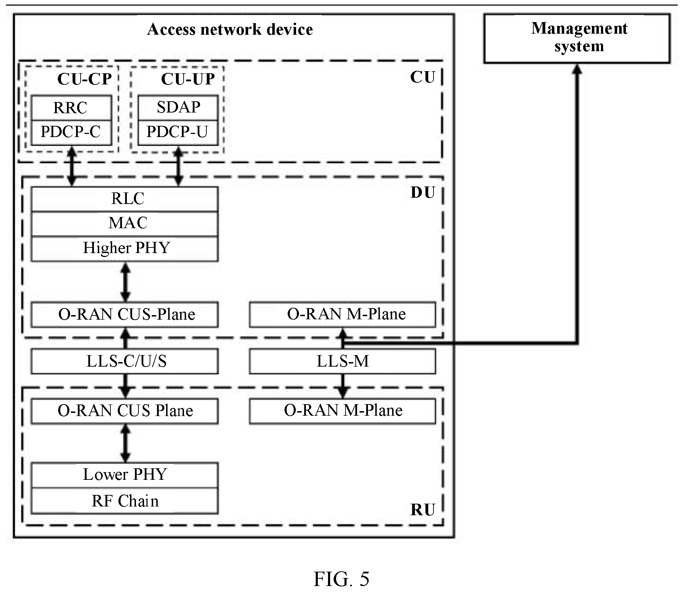

FIG. 5 is a diagram of network element function division and a protocol layer structure of an O-RAN device according to an embodiment of this application. In some examples, a CU is a logical node that carries an RRC layer, an SDAP layer, a PDCP layer, and another control function of an access network device. The CU is connected to a network node like a core network through some interfaces, and these interfaces may be E2 interfaces or the like. Optionally, the CU may have a part of functions of the core network. The CU (for example, the PDCP layer and a higher layer) is connected to a DU (for example, an RLC layer and a lower layer) through some interfaces, and these interfaces may be F1 interfaces or the like. In some examples, these interfaces (for example, F1 interfaces) may provide control plane (control plane, C-Plane) and user plane (user plane, U-Plane) functions (for example, interface management, system information management, UE context management, and RRC message transmission). An F1AP is an application protocol of the F1 interface, which defines a signaling procedure of F1 in some examples. The F1 interface supports a control plane F1-C and a user plane F1-U.

In some examples, the CU may be split into a CU-CP and a CU-UP. The CU-CP is a logical node that carries the RRC layer and a control plane part of a packet data convergence protocol (control plane part of PDCP, PDCP-C) layer, and is configured to implement a control plane function of the CU. The CU-CP may interact with a network element configured to implement a control plane function in the core network. The network element configured to implement the control plane function in the core network may be an access and mobility function network element, for example, an access and mobility management function (access and mobility management function, AMF) in a 5G system. The AMF network element is configured to be responsible for mobility management in a mobile network, for example, location update of a terminal device, network registration of the terminal device, and handover of the terminal device. The CU-UP is a logical node that carries the SDAP layer and a user plane part of the packet data convergence layer protocol (user plane part of PDCP, PDCP-U) layer, and is configured to implement a user plane function of the CU. The CU-UP may interact with a network element configured to implement a user plane function in the core network. The network element configured to implement the user plane function in the core network, for example, a user plane function network element (user plane function, UPF) in the 5G system, is configured to be responsible for forwarding and receiving data in the terminal device. The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, the functions of the CU or the DU may be divided based on service types or other system requirements. For example, division may be performed based on latencies. Functions whose processing time needs to satisfy a low-latency requirement are set on the DU, and functions whose processing time does not need to satisfy the latency requirement are set on the CU.

In some examples, the DU is a logical node that carries the RLC layer, the MAC layer, a higher physical (higher physical, Higher PHY) layer, and other functions. In some examples, the DU may control at least one RU. The DU is connected to the RU through some interfaces, and these interfaces may be fronthaul interfaces. In some examples, the higher PHY layer includes a part of PHY layer processing, for example, processing functions like forward error correction (forward error correction, FEC) encoding and decoding, scrambling, modulation, and demodulation.

In some examples, the RU is a logical node that carries lower physical (lower physical, Lower PHY) layer and radio frequency (radio frequency, RF) processing. In some examples, the RU may be a 3GPP transmission reception point (transmission reception point, TRP), a remote radio head (remote radio head, RRH), or another entity with a similar function. In some examples, the low-PHY includes a part of PHY processing, for example, processing functions such as fast Fourier transform (fast Fourier transform, FFT), inverse fast Fourier transform (inverse fast Fourier transformation, IFFT), digital beamforming, and filtering. The RU communicates with one or more UEs through a radio link.

The DU and the RU may be co-located, or may not be co-located. The DU and the RU exchange control plane information and user plane information through a lower-layer split control, user, and synchronization (lower-layer split CUS-Plane, LLS-CUS) interface through a fronthaul link. The LLS-CUS may include an LLS-C interface and an LLS-U interface that respectively provide a control plane (C-Plane) and a user plane (U-Plane). In some examples, the control plane (C-Plane) means real-time control between the DU and the RU. The DU and RU exchange management information through an LLS-M interface with a fronthaul link. A management plane (M-Plane) means a non-real-time management operation between the DU and RU.

The DU and the RU may cooperate to jointly implement functions of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, and the some functions are closer to the MAC layer. The lower layer function of the physical layer may include some other functions of the physical layer, and these other functions are closer to an intermediate radio frequency side.

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

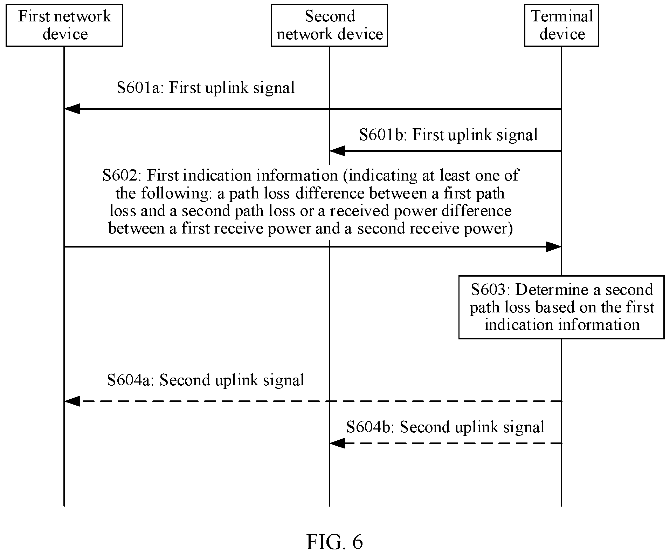

FIG. 6 is a schematic flowchart of a communication method according to an embodiment of this application. For example, the method may include the following steps.

S601a: A terminal device sends a first uplink signal to a first network device. Correspondingly, the first network device receives the first uplink signal.

In this embodiment, the first network device may be a network device that has an uplink function and a downlink function. The first network device may be a network device in any form described above, for example, a TRP.

The terminal device can determine a first path loss between the terminal device and a second network device by measuring a path loss measurement reference signal sent by the first network device, so that the terminal device can determine, based on the first path loss, a transmit power for sending the first uplink signal to the first network device, and send the first uplink signal to the first network device by using the determined transmit power.

S601b: The terminal device sends the first uplink signal to the second network device. Correspondingly, the second network device receives the first uplink signal.

In this embodiment, the second network device is a network device that has only an uplink function but has no downlink function. The second network device may be a network device in any form described above, for example, a TRP.

It may be understood that because the second network device has no downlink function, the terminal device cannot determine a second path loss between the terminal device and the second network device by measuring a path loss measurement reference signal sent by the second network device. Therefore, in this case, a transmit power used by the terminal device to send the first uplink signal to the second network device is determined based on the first path loss.

For example, the first uplink signal may be a sounding reference signal (sounding reference signal, SRS), a physical uplink control channel (physical uplink control channel, PUCCH), a physical uplink shared channel (physical uplink shared channel, PUSCH), a physical random access channel (physical random access channel, PRACH), a DMRS, a phase tracking reference signal (phase tracking reference signal, PTRS), or another uplink signal. The SRS may be an SRS used for beam management, an SRS used for codebook-based uplink transmission, an SRS used for non-codebook-based uplink transmission, or an SRS used for antenna selection. The following uniformly uses an example in which the first uplink signal is an SRS for description. It should be understood that the SRS in the following method may be replaced with any one of the foregoing uplink signals.

The first uplink signal may be one SRS. In other words, the terminal device sends one SRS to the first network device and the second network device. Optionally, the terminal device sends the SRS once, and both the first network device and the second network device receive the SRS. Alternatively, the terminal device repeatedly sends the SRS twice, to send the SRS twice to the two network devices respectively, for example, sends the SRS to the first network device for the first time, and sends the SRS to the second network device for the second time. Optionally, transmit powers used for the two times of sending are equal (to be specific, the power of the first uplink signal sent by the terminal device to the first network device is equal to the power of the first uplink signal sent by the terminal device to the second network device, so that the first network device calculates a difference between the path loss between the terminal device and the first network device, and the path loss between the terminal device and the second network device; and for details, refer to the following descriptions). Optionally, TCI states corresponding to the two network devices are respectively used for the two times of sending. The TCI state is an information element, including information such as a beam used for uplink and downlink transmission, a path loss resource, and a power control parameter. The network device may configure a plurality of TCI states for the terminal device, and indicate two of the TCI states (that is, a first TCI state and a second TCI state) to be used for transmission. The first TCI state is a TCI state used for transmission with the first network device, and the second TCI state is a TCI state used for transmission with the second network device. The TCI states corresponding to the two network devices are the first TCI state and the second TCI state.

The first uplink signal may alternatively be a plurality of SRSs. For example, the first uplink signal includes a first SRS and a second SRS (which are different SRS resources) (herein, it may be considered that the terminal device sends the first uplink signal to the first network device, and the terminal device sends a fourth uplink signal to the second network device, that is, the first uplink signal and the fourth uplink signal are different signals). The first SRS is an SRS sent to the first network device, and the second SRS is an SRS sent to the second network device. Further, the first SRS may specifically include one or more SRSs, in other words, the terminal device sends one or more first SRSs to the first network device. Further, the second SRS may include one or more SRSs, in other words, the terminal device sends one or more second SRSs to the second network device. Optionally, a first transmit power corresponding to the first SRS and a second transmit power corresponding to the second SRS are equal (to be specific, the power of the first uplink signal sent by the terminal device to the first network device is equal to the power of the first uplink signal sent by the terminal device to the second network device, so that the first network device calculates the difference between the path loss between the terminal device and the first network device, and the path loss between the terminal device and the second network device; and for details, refer to the following descriptions). Optionally, the first TCI state and the second TCI state are respectively used for the first SRS and the second SRS.

Optionally, the terminal device may report, to the network device, the transmit power used by the SRS. For example, the terminal device sends first information to the first network device, where the first information indicates the transmit powers of the first uplink signal, and the transmit powers are used by the first network device to calculate the difference between the path loss between the terminal device and the first network device, and the path loss between the terminal device and the second network device. For example, the terminal device repeatedly sends a same SRS twice, to send the SRS twice to the first network device and the second network device respectively. The terminal device may report, to the network device, powers of two times of sending or a power difference between the two times of sending. For another example, the terminal device sends the first SRS and the second SRS to the first network device and the second network device. The terminal device may report the transmit powers of the first SRS and the second SRS or a power difference between the first SRS and the second SRS to the network device.

S602: The first network device sends first indication information to the terminal device. Correspondingly, the terminal device receives the first indication information.

After receiving the first uplink signal, the first network device and the second network device may determine at least one of the following information: the first path loss, the second path loss, the path loss difference between the first path loss and the second path loss, a first received power, a second received power, or a received power difference between the first received power and the second received power, where the first path loss is a path loss between the terminal device and the first network device, the second path loss is a path loss between the terminal device and the second network device, the first received power is a received power of the first uplink signal received by the first network device, and the second received power is a received power of the first uplink signal received by the second network device.

The first network device and the second network device separately measure the first uplink signal sent by the terminal device to the first network device and the second network device, and respectively determine the first received power and the second received power. For example, the received power may be a reference signal received power (reference signal received power, RSRP), reference signal received quality (reference signal received quality, RSRQ), or the like. This is not limited in this application.

After determining the second received power, the second network device may further send the second received power to the first network device. The first network device determines the received power difference between the first received power and the second received power based on the first received power determined by the first network device and the second received power received from the second network device.

The first network device may determine the first path loss based on a transmit power that is pre-negotiated or the transmit power reported by the terminal device, and the first received power determined by the first network device. The first path loss is the transmit power minus the first received power.

The second network device may determine the second path loss based on a transmit power that is pre-negotiated or the transmit power reported by the terminal device, and the second received power determined by the second network device; or the second network device may send the second received power to the first network device, and the first network device determines the second path loss based on a transmit power that is pre-negotiated or the transmit power reported by the terminal device, and the received second received power. The second path loss is the transmit power minus the second received power.

After determining the second path loss, the second network device may send the second path loss to the first network device; or the second path loss may be determined by the first network device (to be specific, the second network device may send the second received power to the first network device, and the first network device determines the second path loss based on the transmit power that is pre-negotiated or the transmit power reported by the terminal device, and the received second received power). The first network device calculates the difference between the first path loss and the second path loss, to obtain the path loss difference between the first path loss and the second path loss.

After obtaining the at least one of the foregoing information, the first network device sends the first indication information to the terminal device. The first indication information indicates at least one of the following: the first path loss, the second path loss, the path loss difference between the first path loss and the second path loss, the first received power, the second received power, or the received power difference between the first received power and the second received power. Alternatively, the first indication information may include at least one of the following: the first path loss, the second path loss, the path loss difference between the first path loss and the second path loss, the first received power, the second received power, or the received power difference between the first received power and the second received power.

When the first uplink signal sent to the second network device is a plurality of second SRSs, the first network device may indicate a plurality of sets of the foregoing information to the terminal device, and each set of information corresponds to one second SRS. Therefore, the terminal device may send different SRSs by using different beams, and a network side may calculate path loss differences corresponding to the different beams.

For example, the first indication information may be carried in at least one type of the following signaling: RRC signaling, a media access control-control element (media/medium access control-control element, MAC-CE), or DCI.

S603: The terminal device determines the second path loss based on the first indication information.

After receiving the first indication information, the terminal device may determine the second path loss based on the first indication information.

In an implementation, the terminal device may determine the second path loss based on the first path loss and the path loss difference. For example, the second path loss satisfies: second path loss=first path loss+path loss difference.

In another implementation, the terminal device may determine the second path loss based on the first path loss, the received power difference, and the transmit powers of the first uplink signal sent by the terminal device to the first network device and the second network device. For example, the second path loss satisfies: second path loss=first path loss+(second received power-transmit power)-(first received power-transmit power)=first path loss+received power difference.

Because the second network device has no downlink transmission capability, when the terminal device cannot directly measure the second path loss between the terminal device and the second network device by using an existing method, in this embodiment, the terminal device uses the first path loss between the terminal device and the first network device as a reference, to obtain the second path loss between the terminal device and the second network device by adding the path loss difference between the terminal device and the two network devices to the first path loss.

To determine the second path loss, the first path loss and the path loss difference need to be first determined.

### 1. Determining of the first path loss

A path loss between a terminal device and a network device is not unique because energy losses of signals that are sent by the terminal device in different directions and that arrive at the network device are different. To distinguish between different path loss values, a path loss may be associated with a path loss resource, that is, each path loss resource corresponds to one path loss value. The path loss resource may be a downlink resource, and a path loss value corresponding to the path loss resource is an energy loss experienced when the path loss resource is sent from the network device to the terminal device. The path loss resource may be an uplink resource, and a path loss value corresponding to the path loss resource is an energy loss experienced when the path loss resource is sent from the terminal device to the network device.

The first path loss is a path loss corresponding to a path loss resource of the first network device. For ease of description, the path loss resource corresponding to the first path loss is referred to as a first path loss resource. The following methods may be used to determine the first path loss resource, in other words, determine a path loss corresponding to which path loss resource is used as the first path loss.

Method 1: The first path loss resource is a path loss resource in the first TCI state currently used by the terminal device, and the first path loss is a path loss corresponding to the path loss resource in the first TCI state currently used by the terminal device. Before step S603, the first network device may send the first path loss resource (downlink resource) to the terminal device. The path loss resource in the first TCI state is the downlink resource sent by the first network device to the terminal device, and the terminal device may measure, by using an existing method, the path loss corresponding to the downlink resource. The first TCI state is a 1^{st} one of two TCI states indicated by the network device to the terminal device. In other words, the first TCI state is a 1^{st} one of two currently effective TCI states. In the method, regardless of a path loss resource in the second TCI state used by the terminal device, the terminal device always uses (that is, uses by default) the path loss resource in the first TCI state as the first path loss resource, where the first TCI state is a 1^{st} one of two TCI states currently used by the terminal device for uplink transmission (the two TCI states currently used by the terminal device for uplink transmission are respectively used for uplink communication with the first network device and uplink communication with the second network device).

Method 2: The first path loss resource is a path loss resource in the second TCI state used by the terminal device. The path loss resource in the second TCI state is a downlink resource sent by the second network device to the terminal device, and the terminal device may measure, by using an existing method, a path loss corresponding to the downlink resource. In the method, the first path loss resource is related to the second TCI state. When the terminal device uses different second TCI states, corresponding first path loss resources may be different. In other words, when sending data to the second network device by using a TCI state, the terminal device directly uses a path loss resource in the TCI state as the first path loss resource.

The terminal device may choose, based on a condition, to use Method 1 or Method 2. For example, when the terminal device sends data to the second network device by using a TCI state, if a path loss resource in the TCI state is a downlink resource (for example, a channel state information-reference signal (channel state information-reference signal, CSI-RS) resource or a synchronization signal block (synchronization signal block, SSB) resource), Method 2 is directly used; if the path loss resource in the TCI state is an uplink resource (for example, an SRS resource), Method 1 is used; or if there is no path loss resource in the TCI state (that is, the path loss resource is default), Method 1 is used.

### 2. Determining of the path loss difference

In an implementation, the path loss difference may be directly indicated by the first indication information in step S602. In other words, after determining the path loss difference in step S602, the first network device directly notifies the terminal device of the path loss difference through the first indication information.

In another implementation, the path loss difference may alternatively be calculated by using the at least one of the first path loss, the second path loss, the first received power, the second received power, or the received power difference between the first received power and the second received power that is indicated by the first indication information in step S602. For example, if the first indication information indicates the first received power and the second received power, the terminal device may calculate the path loss difference based on the two received powers and the transmit powers of the first uplink signal. For another example, the first indication information indicates the received power difference between the first uplink signals received by the two network devices, and the terminal device may calculate the path loss difference between the terminal device and the two network devices based on the received power difference and the transmit power of the first uplink signal.

In addition, the network device may indicate, to the terminal device via the first indication message, a plurality of sets of information corresponding to the plurality of second SRSs, and the terminal device may determine, by using the foregoing method, path loss differences corresponding to the plurality of second SRSs. Then, second path losses corresponding to the plurality of second SRSs may be obtained by using the foregoing formula.

Further, the following steps may be further included (the steps are optional, and are represented by dashed lines in the figure).

S604a: The terminal device sends a second uplink signal to the first network device.

When sending the second uplink signal to the first network device, the terminal device may calculate a transmit power of the second uplink signal based on a first path loss corresponding to a path loss resource in a TCI state used by the second uplink signal, and send the second uplink signal to the first network device by using the transmit power.

S604b: The terminal device sends a second uplink signal to the second network device.

When sending the second uplink signal to the second network device, the terminal device may send the second uplink signal to the second network device based on a second path loss corresponding to a reference SRS in a TCI state used by the second uplink signal and by using a transmit power. The reference SRS in the TCI state may be a path loss resource or a beam reference resource in the TCI state. In addition, a priority may be further introduced. If a path loss resource included in the TCI state is an SRS, the SRS is preferentially used as the reference SRS; or if a path loss resource included in the TCI state is not an SRS, a beam reference SRS is used as the SRS.

The terminal device may determine, based on the following conditions, whether the second uplink signal is sent to the first network device or the second network device. For example, when a first condition is met, the second uplink signal is sent to the first network device; and when a second condition is met, the second uplink signal is sent to the second network device.

The first condition may include one or a combination of the following:

The TCI state used by the second uplink signal includes a path loss resource; and
the path loss resource in the TCI state used by the second uplink signal is a downlink resource, for example, a CSI-RS resource or an SSB resource.

The second condition may include one or a combination of the following:

The TCI state used by the second uplink signal does not include a path loss resource; and
the path loss resource in the TCI state used by the second uplink signal is an uplink resource, for example, an SRS resource.

It may be understood that the second uplink signal sent by the terminal device to the first network device in step S604a and the second uplink signal sent by the terminal device to the second network device in step S604b may be a same signal, or may be different signals.

According to the communication method provided in this embodiment of this application, when the second network device has no downlink transmission capability, the first network device indicates the path loss difference or the received power difference to the terminal device, so that the terminal device can determine the second path loss between the terminal device and the second network device based on the indication, thereby improving accuracy of determining the path loss between the terminal device and the second network device.

As the terminal device moves, both values of the first path loss and the path loss difference that are used to calculate the second path loss may change. Therefore, the second path loss also needs to be updated.

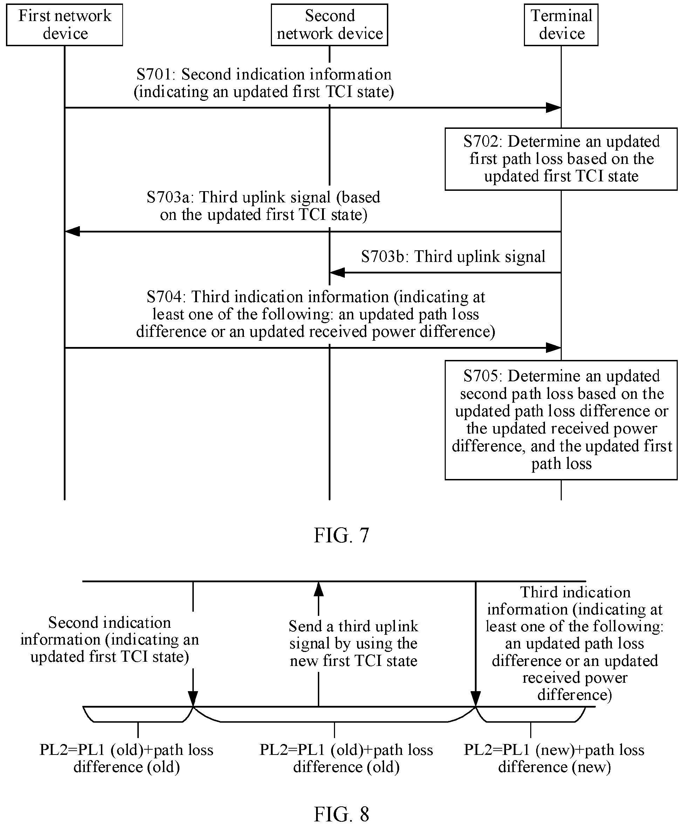

FIG. 7 is a schematic flowchart of another communication method according to an embodiment of this application. For example, the method may include the following steps:
S701: A first network device sends second indication information to a terminal device. Correspondingly, the terminal device receives the second indication information.

A first path loss and a path loss difference change with a first TCI state used by the first network device. Therefore, when the first TCI state is updated, the second indication information needs to be sent to the terminal device. The second indication information indicates an updated first TCI state.

For example, the second indication information may be carried in DCI or MAC-CE signaling.

For ease of description, in this embodiment, the previous TCI state is referred to as an old first TCI state, and the updated TCI state is referred to as a new first TCI state.

S702: The terminal device determines an updated first path loss based on the updated first TCI state.

The first path loss is a path loss corresponding to a path loss resource in the first TCI state currently used by the terminal device. The first path loss changes with the first TCI state. In other words, if the first TCI state is updated, the first path loss is also updated.

For ease of description, in this embodiment, a first path loss corresponding to the old first TCI state is referred to as an old first path loss, and a first path loss corresponding to the new first TCI state is referred to as a new first path loss. A path loss difference corresponding to the old first TCI state is referred to as an old path loss difference, and a path loss difference corresponding to the new first TCI state is referred to as a new path loss difference.

Because the first path loss is the path loss corresponding to the path loss resource in the first TCI state, the path loss may be obtained by measuring the path loss resource. After the first TCI state is updated to the new first TCI state, the terminal device determines the new first path loss based on a path loss resource in the new first TCI state. In other words, regardless of how the first TCI state changes, the terminal device always uses a path loss corresponding to a path loss resource in a currently effective first TCI state as the first path loss.

S703a: The terminal device sends a third uplink signal to the first network device. Correspondingly, the first network device receives the third uplink signal.

After the first TCI state is updated, the terminal device needs to send the third uplink signal to the first network device based on the updated first TCI state. That is, the new first TCI state needs to be used for the third uplink signal sent to the first network device.

S703b: The terminal device sends the third uplink signal to a second network device. Correspondingly, the second network device receives the third uplink signal.

It may be understood that, as shown in FIG. 8, which illustrates an example of a time sequence requirement for updating a second path loss according to an embodiment of this application. Before determining the updated first TCI state and receiving an updated path loss difference or an updated received power difference, the terminal device uses a previous path loss difference (that is, the old path loss difference) or a previous received power difference (that is, an old received power difference), and a previous first path loss (that is, the old first path loss) to determine the second path loss.

The terminal device determines a transmit power based on the old second path loss, and sends the third uplink signal to the second network device by using the transmit power.

For example, the third uplink signal may be an SRS, a PUCCH, a PUSCH, a PRACH, a DMRS, a PTRS, or another uplink signal.

The third uplink signal may be one SRS. In other words, the terminal device sends one SRS to the first network device and the second network device. Optionally, the terminal device sends the SRS once, and both the first network device and the second network device receive the SRS. Alternatively, the terminal device repeatedly sends the SRS twice, to send the SRS twice to the two network devices respectively, for example, sends the SRS to the first network device for the first time, and sends the SRS to the second network device for the second time. Optionally, transmit powers used for the two times of sending are equal (to be specific, a power of the third uplink signal sent by the terminal device to the first network device is equal to a power of the third uplink signal sent by the terminal device to the second network device).

The third uplink signal may alternatively be a plurality of SRSs. For example, the third uplink signal includes a first SRS and a second SRS (which are different SRS resources) (herein, it may be considered that the terminal device sends the third uplink signal to the first network device, and the terminal device sends a fifth uplink signal to the second network device, that is, the third uplink signal and the fifth uplink signal are different signals). The first SRS is an SRS sent to the first network device, and the second SRS is an SRS sent to the second network device. Further, the first SRS may specifically include one or more SRSs, in other words, the terminal device sends one or more first SRSs to the first network device. Further, the second SRS may include one or more SRSs, in other words, the terminal device sends one or more second SRSs to the second network device. Optionally, a transmit power of the first SRS and a transmit power of the second SRS are equal (to be specific, the power of the first uplink signal sent by the terminal device to the first network device is equal to the power of the first uplink signal sent by the terminal device to the second network device).

S704: The first network device sends third indication information to the terminal device. Correspondingly, the terminal device receives the third indication information.

After receiving the third uplink signal, the first network device and the second network device may determine an updated path loss difference with reference to step S602 in the embodiment shown in FIG. 6. The first network device sends the third indication information to the terminal device, where the third indication information indicates at least one of the following: the updated path loss difference or an updated received power difference.

For example, when the second SRS includes a plurality of SRSs, the first network device may indicate a plurality of new path loss differences, and each new path loss difference corresponds to one second SRS.

S705: The terminal device determines an updated second path loss based on the updated path loss difference or the updated received power difference, and the updated first path loss.

After obtaining the updated path loss difference or the updated received power difference, and the updated first path loss, the terminal device determines the updated second path loss based on the updated path loss difference or the updated received power difference, and the updated first path loss.

When the terminal device determines the updated second path loss based on the updated path loss difference or the updated received power difference, and the updated first path loss, the following time sequence requirement needs to be met:

Still refer to FIG. 8. After the new first TCI state indicated by the network device to the terminal device takes effect, the terminal device obtains a new first path loss based on the new first TCI state. It is assumed that time at which the terminal device determines the new first path loss is T1, where T1 may be time at which the new first TCI state takes effect, or the time at which the first TCI state takes effect plus a time offset. The time at which the first TCI state takes effect is time at which a second indication message for the new first TCI state is received, or the time plus a time offset, or time at which the terminal device feeds back an acknowledgement (acknowledgement, ACK) message of the second indication message plus a time offset.

The terminal device sends the third uplink signal by using the new first TCI state, and then receives at least one of the following information delivered by the first network device: the first path loss, the second path loss, the path loss difference between the first path loss and the second path loss, a first received power, a second received power, or a received power difference between the first received power and the second received power, to determine the new path loss difference. It is assumed that time at which the terminal device determines the new path loss difference is T2 (T2>T1). T2 may be time at which the third indication message is received, or time at which the third indication message takes effect. The time at which the third indication message takes effect may be specifically the time at which the third indication message is received plus a time offset, or time at which the terminal device feeds back an ACK message of the third indication message plus a time offset.

Before T1, the terminal device calculates the second path loss based on the old first path loss and the old path loss difference.

Between T1 and T2, the terminal device still calculates the second path loss based on the old first path loss and the old path loss difference. This is because the terminal device has not determined the new path loss difference at this time. If the new first path loss and the old path loss difference are used to calculate the second path loss, an obtained second path loss is inaccurate because the new first path loss and the old path loss difference correspond to different first TCI states.

After T2, the terminal device calculates the second path loss based on the new first path loss and the new path loss difference.

In other words, when the first network device indicates the new first TCI state to the terminal device, and both the new first path loss corresponding to the new first TCI state and the new path loss difference corresponding to the new first TCI state are not determined, the terminal device calculates the second path loss based on the old first path loss and the old path loss difference corresponding to the old first TCI state. The new path loss difference corresponding to the new first TCI state is a path loss difference determined by sending the third uplink signal by using the new first TCI state. For details about how to determine the path loss difference, refer to the method in the embodiment shown in FIG. 6.

In other words, when the first network device indicates the new first TCI state to the terminal device, before determining the path loss difference corresponding to the new first TCI state, the terminal device calculates the second path loss based on the old first path loss and the old path loss difference corresponding to the old first TCI state. The time at which the terminal device determines the path loss difference corresponding to the new first TCI state is time at which the third indication message sent by the first network device to the terminal device takes effect after the terminal device sends the third uplink signal to the first network device and the second network device by using the first TCI state for the first time. The third indication message carries information (at least one of the first path loss, the second path loss, the path loss difference between the first path loss and the second path loss, the first received power, the second received power, or the received power difference between the first received power and the second received power) determined by the first network device by using the third uplink signal that is sent by using the new first TCI state for the first time.

Alternatively, from a perspective of a specific second SRS, when the first network device indicates the new first TCI state to the terminal device, before determining a path loss difference between a path loss corresponding to the SRS and the first path loss, the terminal device calculates a second path loss of the SRS based on the old first path loss and the old path loss difference corresponding to the old first TCI state.

The foregoing method is applicable to a case in which the second SRS includes the plurality of SRSs. In other words, a second path loss of each second SRS may be determined by using the foregoing method.

It may be specified that the foregoing method can be used only in a scenario in which a separate TCI state mode is configured, or conversely, in a scenario corresponding to this application, only a separate TCI state mode can be used.

Alternatively, it may be specified that the foregoing method can be used only in a scenario in which a joint TCI state mode is configured, or conversely, in a scenario corresponding to this application, only a joint TCI state mode can be used.

According to the communication method provided in this embodiment of this application, as the terminal device moves, both a value of the first path loss and a value of the path loss difference that are used to calculate the second path loss may change. Before determining the updated first TCI state and receiving the updated path loss difference or the updated received power difference, the terminal device determines the second path loss based on the old path loss difference or the old received power difference, and the old first path loss. After determining the updated first TCI state and receiving the updated path loss difference or the updated received power difference, the terminal device determines the second path loss based on the new path loss difference or the new received power difference, and the new first path loss. Therefore, accuracy of the second path loss is improved.

It may be understood that, in this application, an example in which the network device and the terminal device serve as execution bodies of an interaction example is used for description. However, the execution bodies of the interaction example are not limited in this application. For example, the network device in the method provided in this application may alternatively be a chip, a chip system, or a processor used in the network device, or may be a logical node, a logical module, or software that can implement all or some functions of the network device. The terminal device in the method provided in this application may alternatively be a chip, a chip system, or a processor used in the terminal device, or may be a logical node, a logical module, or software that can implement all or some functions of the terminal device.

In this application, that an entity A sends information to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entities A and the entity B herein may be RAN nodes or terminal devices, or may be modules in the RAN nodes or terminal devices. Information sending and receiving may be information exchange between a RAN node and a terminal device, for example, information exchange between a base station and a terminal device. Information sending and receiving may alternatively be information exchange between two RAN nodes, for example, information exchange between a CU and a DU. Information sending and receiving may alternatively be information exchange between different modules in an apparatus, for example, information exchange between a chip in a terminal device and another module in the terminal device, or information exchange between a chip in a base station and another module in the base station.

It may be understood that, in the foregoing embodiments, methods and/or steps implemented by the network device may also be implemented by a component (for example, a chip or a circuit) that can be used in the network device, and methods and/or steps implemented by the terminal device may also be implemented by a component (for example, a chip or a circuit) that can be used in the terminal device.

The foregoing mainly describes the solutions provided in embodiments of this application from a perspective of interaction between network elements. Correspondingly, embodiments of this application further provide a communication apparatus. The communication apparatus is configured to implement the foregoing various methods. The communication apparatus may be the network device in the foregoing method embodiments, or may be a component that can be used in the network device. Alternatively, the communication apparatus may be the terminal device in the foregoing method embodiments, or may be a component that can be used in the terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

Based on the same concept of the foregoing communication method, this application further provides the following communication apparatuses.

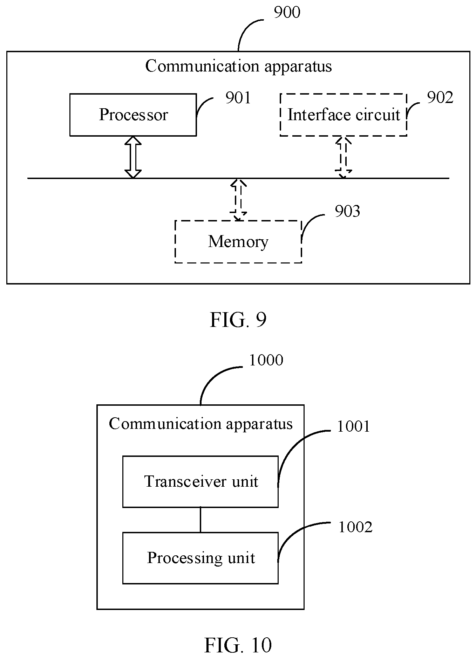

FIG. 9 is a diagram of a structure of a communication apparatus according to an embodiment of this application. The communication apparatus 900 includes a processor 901. Optionally, the communication apparatus 900 may further include an interface circuit 902 (represented by dashed lines in the figure). The processor 901 and the interface circuit 902 are coupled to each other. It can be understood that the interface circuit 902 may be a transceiver or an input/output interface. Optionally, the communication apparatus 900 may further include a memory 903 (represented by dashed lines in the figure). The memory 903 is configured to: store instructions executed by the processor 901, store input data required by the processor 901 to run the instructions, or store data generated after the processor 901 runs the instructions.

When the communication apparatus 900 is configured to implement a function of a terminal device, the interface circuit 902 is configured to implement at least one action performed by the terminal device in steps S601a, S601b, S602, S604a and S604b in the embodiment shown in FIG. 6, and the processor 901 is configured to implement step S603 in the embodiment shown in FIG. 6; or the interface circuit 902 is configured to implement at least one action performed by the terminal device in steps S701, S703a, S703b, and S704 in the embodiment shown in FIG. 7, and the processor 901 is configured to implement steps S702 and S705 in the embodiment shown in FIG. 7.

When the communication apparatus 900 is configured to implement a function of a network device, the interface circuit 902 is configured to implement at least one action performed by the network device in steps S601a, S601b, S602, S604a and S604b in the embodiment shown in FIG. 6; or the interface circuit 902 is configured to implement at least one action performed by the network device in steps S701, S703a, S703b, and S704 in the embodiment shown in FIG. 7.

When the communication apparatus is a chip used in the network device, the chip implements the functions of the network device in the foregoing method embodiments. The chip receives information from another module (for example, a radio frequency module or an antenna) in the network device, where the information is sent by the terminal device to the network device; or the chip sends information to another module (for example, a radio frequency module or an antenna) in the network device, where the information is sent by the network device to the terminal device.

When the communication apparatus is a chip used in the terminal device, the chip implements the functions of the terminal device in the foregoing method embodiments. The chip receives information from another module (for example, a radio frequency module or an antenna) in the terminal device, where the information is sent by the network device to the terminal device; or the chip sends information to another module (for example, a radio frequency module or an antenna) in the terminal device, where the information is sent by the terminal device to the network device.

In addition, it should be noted that the transceiver unit and/or the processing unit may be implemented via a virtual module. For example, the processing unit may be implemented via a software functional unit or a virtual apparatus, and the transceiver unit may be implemented via a software function or a virtual apparatus. Alternatively, the processing unit or the transceiver unit may be implemented via a physical apparatus. For example, if the apparatus is implemented via a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

FIG. 10 is a diagram of a structure of still another communication apparatus according to an embodiment of this application. The communication apparatus 1000 includes a transceiver unit 1001 and a processing unit 1002.

For example, the transceiver unit 1001 may include a receiving unit and a sending unit. The receiving unit and the sending unit may be a whole, or may be independent units.

When the communication apparatus 1000 is configured to implement a function of a terminal device, the receiving unit is configured to implement a receiving action in step S602 in the embodiment shown in FIG. 6, the sending unit is configured to implement a sending action in at least one of steps S601a, S601b, S604a, or S604b in the embodiment shown in FIG. 6, and other steps such as determining the second path loss in the embodiment are implemented by the processing unit 1002; or the receiving unit is configured to implement a receiving action in step S701 and/or S704 in the embodiment shown in FIG. 7, the sending unit is configured to implement a sending action in step S703a and/or S703b in the embodiment shown in FIG. 7, and other steps such as determining the updated first path loss and the updated second path loss in the embodiment are implemented by the processing unit 1002.

When the communication apparatus 1000 is configured to implement a function of a network device, the sending unit is configured to implement a sending action in step S602 in the embodiment shown in FIG. 6, the receiving unit is configured to implement a receiving action in at least one of steps S601a, S601b, S604a, or S604b in the embodiment shown in FIG. 6, and other steps such as generating the first indication information in the embodiment are implemented by the processing unit 1002; or the sending unit is configured to implement a sending action in step S701 and/or S704 in the embodiment shown in FIG. 7, the receiving unit is configured to implement a receiving action in step S703a and/or S703b in the embodiment shown in FIG. 7, and other steps such as generating the second indication information and the third indication information in this embodiment are implemented by the processing unit 1002.

For specific implementations of the transceiver unit 1001 and the processing unit 1002, refer to the related descriptions in embodiments shown in FIG. 6 and FIG. 7.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

An embodiment of this application further provides a chip apparatus, including a processor, configured to invoke a computer program or computer instructions stored in a memory, to cause the processor to perform the method provided in any one of embodiments shown in FIG. 6 and FIG. 7.

In a possible implementation, an input of the chip apparatus corresponds to the receiving operation in any one of embodiments shown in FIG. 6 and FIG. 7, and an output of the chip apparatus corresponds to the sending operation in any one of embodiments shown in FIG. 6 and FIG. 7.

Optionally, the processor is coupled to the memory through an interface.

Optionally, the chip apparatus further includes the memory, and the memory stores the computer program or the computer instructions.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. Herein, the module in the network device may be a baseband chip in the network device, or may be a CU, a DU, or another module, or may be an apparatus in an O-RAN architecture, for example, an apparatus like an open CU or an open DU.

It should be noted that one or more of the foregoing units or units may be implemented by software, hardware, or a combination of software and hardware. When any one of the foregoing modules or units is implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a programmable logic device (programmable logic device, PLD), a dedicated digital circuit, a hardware accelerator, or a non-integrated discrete device. The hardware may run necessary software or do not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of instructions or a data structure and that can be accessed by a computer, but is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It may be understood that, in this application, an "indication" may include a direct indication, an indirect indication, an explicit indication, and an implicit indication. When a specific piece of indication information is described as indicating A, it may be understood as that, the indication information carries A, directly indicates A, or indirectly indicates A. In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

At least one piece (item) in this application below indicates one piece (item) or a plurality of pieces (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. These terms are merely used to distinguish between the objects.

The terms "include", "have", and any variations thereof mentioned above are intended to cover a nonexclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that, in this application, terms such as "example" or "for example" indicate giving an example, an illustration, or a description. Any method or design scheme described as an "example" or "for example" in this application should not be construed as being more preferred or having more advantages than another method or design scheme. To be precise, use of the words such as "example" or "for example" is intended to present a relevant concept in a specific manner.

A network element in a communication system may send a signal to another network element or receive a signal from another network element. The signal may include information, signaling, data, and the like. The network element may alternatively be replaced with an entity, a network entity, a device, a terminal device, a communication module, a node, a communication node, or the like. In this application, the network element is used as an example for description. For example, the communication system may include at least one terminal device and at least one network device. The network device may send a downlink signal to the terminal device, and/or the terminal device may send an uplink signal to the network device. In addition, it may be understood that, if the communication system includes a plurality of terminal devices, the plurality of terminal devices may also send signals to each other. That is, both a signal sending network element and a signal receiving network element may be terminal devices.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A communication method, wherein the method comprises:
sending a first uplink signal to a first network device and a second network device;
receiving first indication information from the first network device, wherein the first indication information indicates at least one of the following: a path loss difference between a first path loss and a second path loss or a received power difference between a first received power and a second received power, the first path loss is a path loss between a terminal device and the first network device, the second path loss is a path loss between the terminal device and the second network device, the first received power is a received power of the first uplink signal received by the first network device, and the second received power is a received power of the first uplink signal received by the second network device; and
determining the second path loss based on the first indication information.

2. The method according to claim 1, wherein before the determining the second path loss based on the first indication information, the method further comprises:
receiving a first path loss resource from the first network device; and
determining the first path loss between the terminal device and the first network device by using the first path loss resource.

3. The method according to claim 1 or 2, wherein the determining the second path loss based on the first indication information comprises:
determining the second path loss based on the first path loss and the path loss difference; or
determining the second path loss based on the first path loss, the received power difference, a first transmit power, and a second transmit power, wherein the first transmit power is a transmit power corresponding to the first uplink signal sent by the terminal device to the first network device, and the second transmit power is a transmit power corresponding to the first uplink signal sent by the terminal device to the second network device.

4. The method according to claim 3, wherein the first transmit power is equal to the second transmit power.

5. The method according to claim 3 or 4, wherein the same second transmit power is determined based on the first path loss.

6. The method according to any one of claims 1 to 5, wherein the method further comprises:
sending first information to the first network device, wherein the first information indicates the transmit powers of the first uplink signal, and the transmit powers are used by the first network device to calculate the path loss difference.

7. The method according to any one of claims 2 to 6, wherein the first path loss resource is a path loss resource in a first transmission configuration indicator TCI-state, and the first TCI state is a 1^{st} one of two TCI states currently used by the terminal device for uplink transmission.

8. The method according to any one of claims 1 to 7, wherein the method further comprises:
receiving second indication information from the first network device, wherein the second indication information indicates an updated first TCI state;
sending a third uplink signal to the first network device and the second network device, wherein sending the third uplink signal to the first network device is based on the updated first TCI state; and
receiving third indication information, wherein the third indication information indicates at least one of the following: an updated path loss difference or an updated received power difference.

9. The method according to claim 8, wherein the method further comprises:
determining an updated second path loss based on the updated path loss difference or the updated received power difference, and the updated first path loss.

10. The method according to claim 8 or 9, wherein the method further comprises:
before determining the updated first TCI state and receiving the updated path loss difference or the updated received power difference, determining the second path loss based on the previous path loss difference or the previous received power difference, and the previous first path loss.

11. A communication method, wherein the method comprises:
receiving a first uplink signal from a terminal device; and
sending first indication information to the terminal device, wherein the first indication information indicates at least one of the following: a path loss difference between a first path loss and a second path loss or a received power difference between a first received power and a second received power, the first path loss is a path loss between the terminal device and a first network device, the second path loss is a path loss between the terminal device and a second network device, the first received power is a received power of the first uplink signal received by the first network device, and the second received power is a received power of the first uplink signal received by the second network device.

12. The method according to claim 11, wherein the method further comprises:
sending a first path loss resource to the terminal device, wherein the first path loss resource is used for the terminal device to determine the first path loss between the terminal device and the first network device.

13. The method according to claim 11 or 12, wherein the method further comprises:
receiving first information from the terminal device, wherein the first information indicates transmit powers of the first uplink signal; and
calculating the path loss difference based on the transmit powers.

14. The method according to claim 12 or 13, wherein the first path loss resource is a path loss resource in a first transmission configuration indicator TCI state, and the first TCI state is a 1^{st} one of two TCI states currently used by the terminal device for uplink transmission.

15. The method according to any one of claims 11 to 14, wherein the method further comprises:
sending second indication information to the terminal device, wherein the second indication information indicates an updated first TCI state;
receiving a third uplink signal from the terminal device, wherein the third uplink signal is based on the updated first TCI state; and
sending third indication information to the terminal device, wherein the third indication information indicates at least one of the following: an updated path loss difference or an updated received power difference.

16. A communication apparatus, comprising a unit configured to implement the method according to any one of claims 1 to 10, or comprising a unit configured to implement the method according to any one of claims 11 to 15.

17. A communication system, comprising a first communication apparatus and a second communication apparatus, wherein the first communication apparatus is configured to implement the method according to any one of claims 1 to 10, and the second communication apparatus is configured to implement the method according to any one of claims 11 to 15.

18. A communication apparatus, comprising a memory, a processor, and a computer program stored in the memory and executable by the processor, wherein when executing the computer program, the processor implements the method according to any one of claims 1 to 10, or when executing the computer program, the processor implements the method according to any one of claims 11 to 15.

19. A chip, wherein the chip is configured to perform the method according to any one of claims 1 to 10, or is configured to perform the method according to any one of claims 11 to 15.

20. A chip module, comprising an interface component and a chip, wherein the chip is configured to perform the method according to any one of claims 1 to 10, or is configured to perform the method according to any one of claims 11 to 15.

21. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 15 is implemented.
